Europäisches Patentamt

European Patent Office

Office européen des brevets

(19)

(11) **EP 1 098 914 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(21) Anmeldenummer: **99941396.6**

(22) Anmeldetag: **26.06.1999**

(51) Int Cl.$^7$: **C08F 10/02**

(86) Internationale Anmeldenummer:
**PCT/DE1999/001874**

(87) Internationale Veröffentlichungsnummer:
**WO 2000/001740 (13.01.2000 Gazette 2000/02)**

(54) **VERFAHREN ZUR HERSTELLUNG VON ETHYLENHOMO- UND ETHYLENCOPOLYMERISATEN NIEDERER DICHTE**

METHOD FOR PRODUCING ETHYLENE HOMOPOLYMERIZATES AND ETHYLENE COPOLYMERIZATES OF A LOWER MASS DENSITY

PROCEDE DE PRODUCTION D'HOMOPOLYMERISATS ET DE COPOLYMERISATS D'ETHYLENE DE FAIBLE MASSE VOLUMIQUE

(84) Benannte Vertragsstaaten:
**AT BE DE ES FR GB IT NL**

(30) Priorität: **01.07.1998 DE 19829399**

(43) Veröffentlichungstag der Anmeldung:
**16.05.2001 Patentblatt 2001/20**

(73) Patentinhaber:
• **Dow Olefinverbund GmbH**
 **06258 Schkopau (DE)**
• **THE DOW CHEMICAL COMPANY**
 **Midland, Michigan 48640 (US)**

(72) Erfinder:
• **ZSCHOCH, Werner**
 **D-06618 Naumburg (DE)**
• **BEER, Harald**
 **D-06179 Holleben (DE)**
• **MEZQUITA, Juan, M.**
 **NL-4535 ER Terneuzen (NL)**
• **LOHSE, Gerd**
 **D-06258 Schkopau (DE)**
• **BERBEE, Otto**
 **NL-4561 XE Hulst (NL)**

(74) Vertreter: **Böhm, Brigitte, Dipl.-Chem. Dr. et al**
 **Weickmann & Weickmann**
 **Patentanwälte**
 **Postfach 860 820**
 **81635 München (DE)**

(56) Entgegenhaltungen:
 **DD-A3- 276 598     US-A- 3 334 081**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Ethylenhomo- und Ethylencopolymerisaten im Dichtebereich bis 0,930 g/cm$^3$ und im Schmelzindexbereich zwischen 0,15 und 25 g/10 min. (2,16 kg; 463 K) bei Drücken oberhalb 1000 bar und bei Temperaturen bis 603 K in mehrzonigen Rohrreaktoren in Gegenwart von Sauerstoff, einem organischen Peroxid mit einer 10 h-Halbwertszeit von weniger als 360 K, und Kettenreglern, von denen mindestens einer eine aldehydische Struktur aufweist und gegebenenfalls anderen Modifikatoren und Comonomeren.

Der Einsatz aldehydischer Kettenregler bei der Olefinpolymerisation ist seit langem bekannt und erforscht (z. B. J. Polym. Sci., Part A-1 (1972), 10 (1), 163-68).

Die Verfahren werden kontinuierlich und als Mehrstufenverfahren realisiert. Nach DE 1795365 werden Ethylenpolymerisate hergestellt, die eine enge Molekulargewichtsverteilung aufweisen, indem das als Kettenregler verwendete Propionaldehyd in die einzelnen Reaktionszonen in bestimmten abgestuften Mengenverhältnissen bezogen auf das Ethylen eingesetzt wird.

Die US 3334081 beschreibt ein kontinuierliches Verfahren zur Polymerisation von Ethylen in Röhrenreaktoren, wobei die Reaktionsmischung, die auch ein C$_{1-8}$-Aldehyd als Kettenregter enthält, in den Röhrenreaktor über mindestens zwei separate Seitenströme an unterschiedlichen Stellen des Reaktors eingebracht werden und durch festgelegte Distanzen zwischen den Zu- und Abströmen von Einsatzstoffen und Produkt bestimmte Produktqualitäten hinsichtlich Schmelzindex erreicht werden können.

Die exakte und reproduzierbare Einstellung der jeweiligen Konzentration an Initiator, Kettenregler und gegebenenfalls Comonomeren in den Einsatzgasströmen ist eine Grundvoraussetzung für stabile Reaktionsführung bei hohem Umsatz und die Herstellung des gewünschten Polymerisats mit gleichbleibender guter Qualität.

Nach DD 276 598 erfolgt bei der Herstellung von Ethylenpolymerisaten in Mehrzonenrohrreaktoren mit mindestens zwei Seitenstromeinspeisungen durch radikalische Massepolymerisation unter Verwendung von Sauerstoff als initiator bei Drücken oberhalb 80 MPa und Temperaturen von 373 bis 623 K die Bereitstellung der Einsatzgasströme in der geforderten Zusammensetzung hinsichtlich des Sauerstoff- und Kettenreglergehaltes in der Weise, daß zunächst je ein kettenregler- und sauerstoffhaltiger Ethylenstrom formiert wird und durch Aufteilen der Gasströme und nachfolgendes Vermischen der Teilströme in definierter Menge untereinander und mit Zwischendruckrückgas mindestens 3 Einsatzgasströme mit definierter und reproduzierbarer Zusammensetzung gebildet, getrennt auf Reaktionsdruck verdichtet und dem Reaktor zugeführt werden.

Die Relation von Kombinationen aus organischen Radikalbildnem, Sauerstoff und Kettenreglem bei Polymerisationsprozessen oberhalb 1000 bar bei sehr hohen Monomerumsätzen ist aber auch entscheidend für die Gewährleistung der Anlagenverfügbarkeit, der Prozeßstabilität und der grundlegenden Folieneigenschaften während der Herstellung des LDPE je nach Anwendungscharakteristik.

Bei der Kombination von hochaktiven Aldehyden als Kettenregler (Molekulargewichtsregler) mit organischen Tieftemperaturperoxiden wie z. B. Perpivalat oder Perneodekanoat und Sauerstoff, wobei die organischen Peroxide und Sauerstoff stets in die jeweils gleiche Reaktionszone dosiert werden, kommt es bei der Überschreitung von definierten Dosiergrenzen des Aldehyds, der nicht dem Kettenreglermechanismus unterliegt, zu nichtradikalischen (ionischen) Nebenreaktionen, die als Redox- und Ionentransportreaktionen zwischen allen sauerstoffhaltigen Stoffen charakterisiert sind und bevorzugt thermisch relativ stabile Hydroperoxide (insbesondere tert.-Butyl-Hydroperoxid) bilden können, die bei Anreicherung im Hochdruckkreislauf zu unkontrollierbaren Zersetzungsreaktionen führen. Entscheidend dabei ist die Konzentrations- und Verweilzeitcharakteristik des unverbrauchten organischen Tieftemperaturperoxides und der Beschleunigungsverlauf seiner Radikalbildung im Reaktorzoneneingangsbereich mit diskreten (niedrigen) Reynoldszahlen unter dem chemischen Einfluß des Aldehyds und/oder dessen Folgeprodukte und des Sauerstoffs.

So wird in der DD 251 261 für Anfahrprozesse ein Verfahren beschrieben, wie spontane Reaktionsgemischzersetzungen vermieden werden können, indem ein bestimmtes Verhältnis der Volumina von Ethylen zu Wasserstoff eingestellt wird.

Nach dem Verfahren gemäß DD 151 453 wird neben Sauerstoff als Initiator die Peroxyverbindung tert.-Butyl-2-ethylhexanoat (t-B-Peroktoat) vorgeschlagen, um durch Verringerung des inhibierenden Effekts des Sauerstoffs und durch Verschiebung der Polymerisationsreaktion zum Reaktoranfang hin eine bessere Raum-Zeit-Ausbeute zu erhalten und zu kürzeren Rohrreaktoren zu gelangen. Die Initiatoreffektivität in dieser Kombination ist zwar ausgezeichnet, die Prozeßstabilität gut, aber der Gesamtmonomerumsatz ist mit jedem bekannten Kettenregler oder Kettenreglergemisch dennoch nicht befriedigend.

Bekannt geworden sind auch zahlreiche Verfahren zur Polymerisation des Ethylens ohne und mit Comonomeren, nach denen versucht wird, die Vorteile der Sauerstoffinitiierung bzw. die der organischen Peroxidverbindungen durch geeignete Kombinationen zu vereinigen (z. B. US-PS 3 781 255, US-PS 3 687 867, US-PS 3 420 807). So wird z. B. gemäß DE-OS 2 558 266 Ethylen unter hohem Druck in Gegenwart von mindestens drei Initiierungsmitteln polymerisiert, wobei davon außer Sauerstoff mindestens ein organisches Initiierungsmittel mit einer 10-h-Halbwertszeit-Temperatur von kleiner 396 K und mindestens eines mit einer 10-h-Halbwertszeit-Temperatur von größer 403 K verwendet wird.

Weiterhin ist bekannt, daß Perester als organische Radikalbildner in bestimmten Konzentrationsverhältnissen mit Sauerstoff zur Hydroperoxidbildung neigen und bei längeren Verweilzeiten zur Anreicherung führen können. Diskutiert und angewandt werden nicht zuletzt deshalb auch Prozeßvarianten generell ohne molekularen Sauerstoff oder Luft, wobei die Kombinationen Aldehyd/Hochtemperaturperoxid (ionische) Redoxsysteme bilden können, die ein ständig wachsendes Radikaldefizit mit zunehmenden Umsatzverlusten zur Folge haben können.

Bei allen bekannten Veröffentlichungen fehlen stets die Reaktorstabilitätskriterien, sofern Kettenregler-Initiator-Kombinationen mit Aldehyden, Tieftemperaturperoxiden mit 10-h-Halbwertszeiten von ca. < 360 K und Sauerstoff in Reaktoren mit Kaltgaszuführung angewandt werden, die häufig in Abhängigkeit von der jeweiligen Reaktorkonfiguration zu labiler oder instabiler Prozeßführung neigen oder/und niedrige Monomerumsätze aufweisen oder bei hohen Monomerumsätzen kostenaufwendig betrieben werden.

Das Ziel der Erfindung besteht in der Gewährleistung der sicheren und stabilen Prozeßführung mit hoher stationärer Kontinuität und Verfügbarkeit im Hochdruck-Rohrreaktor zur Produktion von an Inhomogenitäten armen LDPE-Basismaterialien für den Foliensektor und für Compounds unter äußerst günstigen ökonomischen Herstellungsbedingungen im Schmelzindexbereich zwischen 0,15 g/10 min und 25 g/ 10 min.

Die Erfindung bezieht sich auf eine prozeßtechnische Neuerung bei Hochdruckpolymerisationsverfahren des Ethylens in Rohrreaktoren mit Kaltgaszuführung zur Begrenzung des Masseanteils an von Hilfsstoffen produzierten (protonischen) Neben- und Oxidationsprodukten, insbesondere von störenden Hydroperoxiden, wodurch höchste Monomerumsätze erzielt und ausgezeichnete Eigenschaften bei der Anwendung im Fein-, Verpackungs- und Schwerlast-Folienbereich und bei Kabel- und Rohrbeschichtungs-Compounds (KBC) auf LDPE-Basis gewährleistet werden. Hinzu kommt eine entscheidende Erhöhung der Prozeßstabilität und Antagenverfügbarkeit bei diesem radikalischen Polymerisationsverfahren.

Es bestand die Aufgabe, unter Anwendung von hochreaktiven Aldehyden als Kettenregler eine sichere und stabile kontinuierliche radikalische Polymerisation in mehrzonigen Rohrreaktoranlagen unter Verwendung von Kombinationen aus organischen Tieftemperaturperoxiden und Sauerstoff bei höchsten Umsätzen zu verwirklichen. Diese Aufgabe wurde gelöst durch ein Verfahren mit definierten Einsatz- und Stabilitätskriterien für die grundlegenden Prozeßsteuer- und Regelgrößen.

Gegenstand der Erfindung ist, daß in einem, jeder Reaktionszone zuordenbaren temperatur- und druckabhängigen Beschleunigungsfeld die Verfahrensbedingungen so eingestellt werden, daß der Quotient a aus a = $\grave{u}/t_{1/2H}$ [Peroxid], worin $\grave{u}$ die mittlere Strömungsgeschwindigkeit des Monomeren oder Reaktionsgemisches am jeweiligen Dosierort des organischen Peroxides in $m*s^{-1}$ und $t_{1/2H}$ [Peroxid] die mittlere temperatur- u. druckabhängige Halbwertszeit des organischen Peroxides am jeweiligen aktuellen Dosierort im Reaktor in Sekunden ist, in einem Gültigkeitsbereich von a = $1,0 \pm 0,7$ $m*s^{-2}$, vorzugsweise $1,0 \pm 0,5$ $m*s^{-2}$, das Verhältnis $G/F_z$ < 2 erfüllt, und die Konzentration jedes zum Einsatz kommenden organischen Peroxides $c_o$, gemessen in mol/l reines Peroxid, nur so niedrig eingestellt wird, daß der als Verhältnis $G/(F_z * c_o)$ definierte Volumenstrom, gemessen in $l*h^{-1}$, stets < 2 ist, worin G die maximale in jede Reaktionszone dosierte reine Aldehydmenge in mol/h und $F_z$ die auf den mittleren Schmelzindex bezogene Fließzahl des Zielproduktes gemäß dem Zusammenhang $F_z$ = $50*[\log_{10} (MFI) + 1]$ sind und MFI der gemessene mittlere Schmelzindex in g/10 min des gewünschten Zielproduktes unter den für LDPE üblichen Meßbedingungen 463 K und 2,16 kg Belastung ist.

Bei dem Verfahren werden chemo-kinetische Kenndaten der reaktiven Einsatzstoffe (thermische Halbwertszeiten, Konzentrationen, Dosiermengen) mit strömungsmechanisch relevanten Kenndaten des Rohrreaktors (Strömungsgeschwindigkeit) unter Berücksichtigung der Zielproduktqualität (Schmelzindex, Fließzahl) in einer Weise gekoppelt, daß störende Nebenreaktionen, insbesondere polarinduktive Substitutionseffekte, die zur Bildung und Anreicherung von organischen Hydroperoxiden führen können, auf ein Minimum reduziert werden und somit außerordentlich stabile Prozeßbedingungen erzielt werden können.

Dabei sind die Einsatz- und Stabilitätskriterien einem grundlegenden temperatur- und druckabhängigen Beschleunigungsfeld a in jeder Reaktorzone mit a = $\grave{u}/t_{1/2H}$[Peroxid] zugeordnet, wobei $\grave{u}$ die mittlere Strömungsgeschwindigkeit des Monomeren (Ethylen) oder des Reaktionsgemisches (Ethylen/Polyethylen) am jeweiligen Dosierort des organischen Peroxides in $m*s^{-1}$ und $t_{1/2H}$[Peroxid] die mittlere temperatur- u. druckabhängige Halbwertszeit des organischen Peroxides am jeweiligen aktuellen Dosierort im Reaktor in Sekunden ist.

Für a ist ein Gültigkeitsbereich von $1,0 \pm 0,7$ $m*s^{-2}$, vorzugsweise $1,0 \pm 0,5$ $m*s^{-2}$ (grundlegender Definitionsbereich), festgelegt, in dem das Verhältnis $G/F_z$ < 2 (Kettenreglerbegrenzung) zu erfüllen ist, worin G die maximale in jede Reaktionszone dosierte reine Aldehydmenge in mol / h und $F_z$ die auf den mittleren Schmelzindex bezogene Fließzahl des Zielproduktes gemäß dem Zusammenhang:

$$F_z = 50 * [\log_{10} (MFI) + 1]$$

ist.

Von maßgeblicher Bedeutung für die erfindungsgemäße Anwendung ist die Einstellung von definierten Start- bzw. Einsatzkonzentrationen der organischen Peroxide in jeder Reaktionszone, welche den Gültigkeitsbereich der genannten Definition erfüllen, mit denen die aus einem Tieftemperaturbereich heraus startende Initiierungsreaktion entsprechend der Zerfallscharakteristik Primärradikale und kettenwachstumsfördernde Kohlenwasserstoffradikale erzeugt werden, ohne daß die stets mögliche t-Butylhydroperoxidbildung zur Anreicherung im Hoch- und Zwischendruckkreislauf führen kann. Dabei ist es im Sinne der Erfindung unerheblich, in welchem zeitlichen Peroxid-/Sauerstoff-Molverhältnis die Radikalzuführung in die jeweilige Reaktorzone erfolgt. Somit ist erfindungsgemäß die Eingangskonzentration $c_0$ des organischen Peroxides, welches in Form einer geeigneten Peroxidlösung in den Reaktor dosiert wird, gemessen in mol/l reines zu dosierendes Peroxid, nur so niedrig einzustellen, daß der als Verhältnis $G/(Fz*c_0)$ (Peroxid-Konzentrationsbegrenzung) definierte Volumenstrom stets unterhalb 2 l*h$^{-1}$ ist, wobei alle das Volumen kennzeichnende Maßangaben auf üblichen Normaldruck (1 bar) und 273 K bezogen sind.

Jede einzelne zum Einsatz kommende organische Peroxid-Komponente unterliegt separat der genannten Konzentrationsbegrenzung, sofern der grundlegende Definitionsbereich für das Beschleunigungsfeld a bei der jeweiligen Starttemperatur im Reaktor erfüllt wird.

Untergeordnet und erfindungsgemäß irrelevant sind somit solche organische Peroxide, deren Radikalbildungsgeschwindigkeiten im thermisch gleichen Bereich wie die des Sauerstoffs liegen und die zahlenmäßig eine 10 h-Halbwertszeit von gleich oder größer als 360 K aufweisen.

Für die Gewährleistung der stabilen und stationären Prozeßführung bei höchsten Monomerumsätzen ist es wesentlich, daß die beiden Stabilitätskriterien $G/F_z < 2$ und $G/(F_z * c_0) < 2$ auch in den Reaktionszonen erfüllt werden, in denen zwar organisches Peroxid gemäß Definitionsbestimmung vorliegt, aber nicht organisches Peroxid und Sauerstoff gleichzeitig anwesend sein müssen, jedoch organisches Peroxid und Sauerstoff gleichzeitig in einer oder mehreren anderen Zonen, vorzugsweise in der Folgezone. Auf diese Weise wirkt der überschüssige, offensichtlich nicht reglerwirksame aldehydische Kettenregleranteil nicht destabilisierend im Initiierungssystem mit organischem Peroxid und Sauerstoff in der Folgezone. Bei jeweils niedrigen Starttemperaturen in den einzelnen Reaktionszonen können unter Verwendung geeigneter organischer Peroxide und von Sauerstoff, unterstützt vom aldehydischen Kettenregler, höchste Monomerumsätze bei bester Prozeßkontinuität und guten optischen und mechanischen Folieneigenschaften sowie ausgezeichnete Basiseigenschaften für Compounds erzielt werden.

Der Einsatz von Sauerstoff als Hochtemperatur-Peroxidkomponente ist erfahrungsgemäß gegenüber Peroxiden wesentlich kostengünstiger und erspart weitgehend aufwendiges Purgen zwecks Begrenzung des Inertenanteils.

Die Vorteile der erfindungsgemäßen Verfahrensweise werden anhand der folgenden Beispiele und der in Tabelle 1 zusammengefaßten Ergebnisse dargestellt, wobei die Beispiele 1 bis 5 Vergleichsbeispiele sind.

Ausführungsbeispiele:

Vergleichsbeispiel 1:

In einem 2-Zonen-Rohrreaktor, der von einem heißwasserhaltigen Mantel umgeben ist, erfolgt in jeder Reaktionszone eine radikalische Polymerisation des Ethylens bei einem Reaktordruck von 2230 bar, gemessen am Eingang der 1. Zone, die von 50 % der Ethylenfördermenge eines Reaktionsdruckkompressors mit 22000 kg/h Gesamtkapazität gespeist wird. Um ein Polyethylen niederer Dichte mit einem Schmelzindex von 0,75 g/10 min (463 K, 2,16 kg), entsprechend einer mittleren Fließzahl von 43,8, zu produzieren, werden als Radikalbildner in der 1. Zone, in der eine mittlere Strömungsgeschwindigkeit des Ethylens von 4,7 m/s vorliegt, ein Gemisch aus tert.-Butyl-Peroxypivalat (t-B-PPV) und Sauerstoff verwendet, wobei das organische Peroxid zu 12,0 Ma.-%, entsprechend 0,62 mol/l reines t-B-PPV, in der Lösung mit einem gesättigten flüssigen Kohlenwasserstoffgemisch enthalten ist. Bei einer Starttemperatur in der 1. Zone von 413 K liegt die Halbwertszeit des t-B-PPV bei 4,2 s. Dosiert werden 1,86 mol/h reines t-B-PPV und zwecks Erzeugung einer Maximaltemperatur von 568 K 1,93 mol/h Sauerstoff. Zur Einstellung des gewünschten Schmelzindex wird in der 1. Zone eine spezifische Propionaldehyddosis $G/Fz$ von 2,25 mol/h eingestellt. Unter diesen Prozeßbedingungen liegt in einem Beschleunigungsfeld a (= $ù/t_{1/2H}$) von 1,12 m/s$^2$ ein spezifisches Kettenregler-Peroxid-Volumenstrom-Verhältnis $G/(Fz*c_0)$ von 3,62 l/h vor, das zwar zu einem hohen rechnerischen Produktausstoß in der 1. Zone mit 1800 kg/h führt, aber eine außerordentlich niedrige Prozeßsicherheit und Anlagenstabilität aufweist, die mit sehr häufigen Notabschaltungen wegen thermischer Reaktionsgemischzersetzung einhergeht und somit prozeß- und sicherheitstechnisch unvertretbar ist. Durch Kühlung des Reaktionsgemisches aus der 1. Zone und Mischung mit Kaltgas aus dem Reaktionsdruckkompressor wird eine neue Starttemperatur am Eingang der 2. Zone von 429 K ausgebildet, an deren Stelle ein Initiatorgemisch aus tert.-Butyl-Peroktoat (t-B-PO) und Sauerstoff dosiert wird, wobei t-B-PO als 7,0 Ma.-%ige Lösung, entsprechend 0,29 mol/l, mit einer Dosiermenge von 2,18 mol/h und Sauerstoff mit 4,91 mol/h eingesetzt werden. Obwohl in die 2. Zone kein Aldehyd als Kettenregler dosiert wird, kann es zu unruhiger Prozeßführung durch starke Temperaturschwankungen kommen, da auf Grund der Halbwertszeit des t-B-PO von 7,3 s bei dieser Starttemperatur und 9,5 m/s mittlere Strömungsgeschwindigkeit ein Beschleunigungsfeld a ( = ù/t$_{1/2H}$) von 1,30 m/s$^2$ besteht. Generell ist die gesamte Polyethylensyntheseanlage bei gutem Produktausstoß von 5000 kg/h und guter Polyethylenqualität stark störanfällig und sicherheitsgefährdend.

Vergleichsbeispiel 2:

In der gleichen Rohrreaktoranlage wie in Beispiel 1 wird ein niederdichtes Polyethylen mit einem Schmelzindex von 2,0 g/10 min (463 K, 2,16 kg), entsprechend einer mittleren Fließzahl von 65,1, hergestellt. Als organisches Peroxid kommt in der 1. Zone ebenfalls tert.-Butyl-Peroxypivalat (t-B-PPV) mit einer Einsatzkonzentration von 10,0 Ma.-% mit 0,52 mol/l reinem Peroxidanteil bei einer mittleren Strömungsgeschwindigkeit von 7,4 m/s und einer Starttemperatur von 411 K, entsprechend einer Halbwertszeit am Dosierort von 5,0 s, zum Einsatz, wobei in einem Beschleunigungsfeld von 1,48 m/s$^2$ eine spezifische Kettenreglermenge (Propionaldehyd) G/Fz von 2,07 mol/h und ein spezifisches Kettenregler-Peroxid-Volumenstrom-Verhältnis G/(Fz*c$_0$) von 3,59 l/h wirksam sind. Bei einem ökonomisch günstigen Produktausstoß mit guter Folienqualität finden ständig Zersetzungsreaktionen im Reaktor statt, die zum einen mit großer Häufigkeit die Anlagensicherheit extrem gefährden (Verpuffungsgefahr) und zum anderen ständig große rußhaltige Entspannungsgasmengen mit Polyethylenpartikeln freisetzen und damit rohstoffvernichtend und umweltbelastend wirken.
Der hohe Monomerumsatz in der 2. Reaktionszone von 3300 kg/h in Verbindung mit dem Ausstoß aus der 1. Zone von 1800 kg/h läßt dennoch keine risikofreie Reaktionsführung zu.

Vergleichsbeispiel 3:

Im Vergleichsbeispiel 3 wird, wie im Vergleichsbeispiel 1, das gleiche Produkt mit gleichem Schmelzindex hergestellt. Bei gleicher Strömungsgeschwindigkeit von 4,7 m/s und gleicher Starttemperatur von 413 K in der 1. Zone wird mit einem tert.-Butyl-Peroktoat (t-B-PO)-Sauerstoff-Gemisch als Radikalbildner operiert, so daß die Halbwertszeit am Dosierort 28,2 s beträgt und das Initiierungssystem in einem Beschleunigungsfeld von 0,17 m/s$^2$ liegt. Während der Kettenregler Propionaldehyd mit 2,29 mol/h spezifischer Dosiermenge nur in die 1. Zone dosiert wird und mit 0,29 mol/l Einsatzkonzentration an t-B-PO ein sehr hoher Wert beim spezifischen Volumenstromverhältnis G/(Fz*c$_0$) von 7,85 l/h zu verzeichnen ist, wird unter stabilen Produktionsbedingungen ein ökonomisch ungünstiger Produktausstoß festgestellt, der in der 1. Zone rechnerisch bei 1600 kg/h liegt und im Zusammenwirken mit den Prozeßverhältnissen in der 2. Zone wie im Vergleichsbeispiel 1 insgesamt nur 4800 kg/h Totalausbeute einbringt.

Vergleichsbeispiel 4:

Ähnlich wie im Vergleichsbeispiel 3 wird ein Polyethylen mit einem Schmelzindex von 2,0 g/10 min, entsprechend einer Fließzahl von 65,1, bei einer Strömungsgeschwindigkeit in der 1. Zone von 7,0 m/s unter Verwendung von tert.-Butyl-Peroktoat (t-B-PO)-Sauerstoff-Gemisch mit jeweils 7,0 Ma.-%, entsprechend 0,29 mol/l, organisches Peroxid in der Peroxidlösung bei einer Starttemperatur von 413 K, entsprechend 28,2 s Halbwertszeit, hergestellt. Das Beschleunigungsfeld in der 1. Zone wird zahlenmäßig mit 0,25 m/s$^2$ charakterisiert. Zur Regulierung des Schmelzindex wird in die 1. Zone eine spezifische Kettenreglermenge (Propionaldehyd) G/Fz von 1,46 mol/h zugesetzt und somit ein spezifisches Kettenregler-Peroxid-Volumenstrom-Verhältnis G/(Fz*c$_0$) von 5,02 l/h wirksam. In der 2. Reaktionszone wird neben den Radikalbildnern (t-B-PO-Sauerstoff-Gemisch) bei einer mittleren Strömungsgeschwindigkeit von 9,5 m/s und bei einem Reaktionsstart von 433 K entsprechend 5,3 s Halbwertszeit des organischen Peroxids eine Beschleunigung von 1,80 m/s$^2$ wirksam. Auch hier wird Propionaldehyd mit einer spezifischen Dosis G/Fz von 0,74 mol/h zugesetzt, die in Verbindung mit der Peroxidkonzentration zu einem Volumenstromverhältnis G/(Fz*c$_0$) von 2,54 l/h führt. Trotz der stabilen und sicheren Prozeßführung bei ausgezeichneten optischen Eigenschaften der aus dem LDPE hergestellten Folien kann nur ein Monomerumsatz entsprechend einem Produktausstoß von insgesamt 4600 kg/h realisiert werden.

Vergleichsbeispiel 5:

In einen 3-Zonen-Rohrreaktor, der ebenfalls von einem Heißwassermantel umgeben ist, erfolgt in jeder Reaktionszone eine radikalische Polymerisation des Ethylens bei einem Reaktordruck von 2250 bar, gemessen am Eingang der 1. Zone, die von 50 % der Ethylenfördermenge eines Reaktionsdruckkompressors mit 56500 kg/h Gesamtkapazität gespeist wird. Um ein Polyethylen niederer Dichte mit einem Schmelzindex von 0,25 g/10 min (463 K, 2,16 kg), entsprechend einer mittleren Fließzahl von 19,9, zu produzieren, werden als Radikalbildner in der 1. Zone, in der eine mittlere Strömungsgeschwindigkeit des Ethylens von 12,1 m/s vorliegt, ein Gemisch aus tert.-Butyl-Peroktoat (t-B-PO) und Di-tert.-Butyl-Peroxid (DTBP) verwendet, wobei t-B-PO zu 33,8 Ma.-%, entsprechend 1,41 mol/l, reines Peroxid in der Lösung gemeinsam mit DTBP enthalten ist. Bei einer Starttemperatur in der 1. Zone von 413 K liegt die Halbwertszeit des t-B-PO bei 28,2 s. Dosiert werden 21,1 mol/h reines t-B-PO und zwecks Erzeugung einer Maximaltemperatur von 583 K eine entsprechende Menge an DTBP. Zur Einstellung des gewünschten Schmelzindex wird in der 1. Zone eine spezifische Propionaldehyddosis G/Fz von 2,17 mol/h eingestellt. Unter diesen Prozeßbedingungen liegt in einem Beschleunigungsfeld a ( = ù/$t_{1/2H}$) von 0,43 m/s$^2$ ein spezifisches Kettenregler-Peroxid-Volumenstrom-Verhältnis G/(Fz*$c_0$) von 1, 54 l/h vor, das zwar zu einem hohen Ausstoß in der 1. Zone mit 5300 kg/h führt, auch eine gute Prozeßstabilität in Zone 1 aufweist, aber in der 2. Zone bei einer Beschleunigung von 0,60 m/s$^2$, die sich in Anwesenheit von t-B-PO und Sauerstoff aus der bei der vorliegenden Starttemperatur von 418 K meßbaren Halbwertszeit von 18,3 und einer Strömungsgeschwindigkeit von 11,0 m/s ergibt, in Abwesenheit von frisch dosiertem Aldehyd in der 2. Zone starke Reaktortemperaturschwankungen beobachtet werden, die sich unzulässig stark auf den Schmelzindex auswirken, so daß der gewünschte (enge) Indexbereich nicht sicher eingehalten werden kann. In Verbindung mit einer erneuten radikalischen Initiierung am Eingang der 3. Zone bei einer Starttemperatur von 565 K und einer 3. Maximaltemperatur von 587 K ohne Anwendung von organischem Peroxid kann mit einem Monomerumsatz entsprechend einem Ausstoß von 15800 kg/h für Produktanwendungen im Schwerlastfolienbereich gerechnet werden.

Beispiel 6:

Ebenso wie im Vergleichsbeispiel 1 werden im selben Reaktor, der in gleicher Weise vom Reaktionsdruckkompressor mit Ethylen versorgt wird, zur Herstellung des gleichen Produktes unter gleichen Eingangsdruck- und Maximaltemperaturen die gleichen Peroxidarten in der jeweils gleichen Zone bei jeweils gleichen Strömungsgeschwindigkeiten, von 4,7 m/s in der 1. und von 9,5 m/s in der 2. Reaktionszone bei der gleichen Starttemperatur in der 1. Zone von 413 K, entsprechend einer Halbwertszeit des t-B-PPV von 4,2 s, aber bei einer Start- bzw. Mischtemperatur von 423 K in der 2. Zone, entsprechend einer Halbwertszeit des t-B-PO von 11,9 s, eingesetzt Die Zuführung des Kettenreglers Propionaldehyd zur Einstellung des gewünschten Schmelzindex von 0,75 g/10min, entsprechend 43,8 in der Fließzahl, erfolgt sowohl als Teilmenge in die 1. Zone, wobei hier im Gegensatz zum Vergleichsbeispiel 1 1,62 mol/h spezifische Aldehyddosis G/Fz zugesetzt wird als auch als Teilmenge in die Zone 2 mit 0,79 mol/h G/Fz. Im selben Beschleunigungsfeld der 1. Zone wie im Vergleichsbeispiel 1 von a (= ù/$t_{1/2H}$) gleich 1,12 m/s$^2$ wird das organische Peroxid für die Initiierung in der 1. Zone mit einer Konzentration von 16,0 Ma.-% oder 0,83 mol/l reines Peroxid zugeführt, so daß in Verbindung mit der gezielten Kettenregleraufteilung ein spezifisches Kettenregler-Peroxid-Volumenstrom-Verhältnis G/(Fz*$c_0$) von 1,95 l/h vorliegt. In der 2. Zone liegt in einem Beschleunigungsfeld von a ( = ù/$t_{1/2H}$) gleich 0,80 m/s$^2$ ein spezifischer Kettenregler-Peroxid-Volumenstrom-Verhältnisfaktor G/(Fz*$c_0$) von 1,90 l/h vor, der wertmäßig durch Anwendung eines 10 Ma.-%igen t-B-PO -Ansatzes mit 0,42 mol/l reines Peroxid eingestellt wird. Auf diese Weise liegen bei einem hohen, zum Vergleichsbeispiel 1 analogen Gesamtumsatz außerordentlich konstante und prozeßtechnisch stabile Polymerisationsverhältnisse in der Anlage vor, von denen zu keinem Zeitpunkt Gefährungen durch thermisch unkontrollierte Verpuffungsreaktionen ausgehen.

Bemerkenswert ist, daß auch bei der Anwendung von höheren Reaktordrücken in LDPE-Rohrreaktoren (z. B. 2800 bar) die maßgeblichen spezifischen aldehydischen Kettenregtermengen- und Peroxidkonzentrationsbegrenzungen im Wirkungsbereich des definierten Beschleunigungsfeldes eingehalten werden, indem zielproduktabhängig Kombinationen aus aldehydischen und olefinischen oder anderen Kettenreglern verwendet werden und die mit dem Ethylendruck allgemein ansteigende Peroxideffektivität nicht durch beliebige Konzentrationsverdünnungen der eingesetzten Peroxidlösungen, sondern durch Einstellung des Verbrauchs an relevantem Peroxid über die Konsumtionoder Dosisrate (mol/h) realisiert werden.

Beispiel 7 - 9:

Analog zum Vergleichsbeispiel 5 erfolgt in den Beispielen 7 bis 9 in der gleichen Hochdruckpolyethylenanlage mit gleicher Reaktorkonfiguration und gleichem Ethylenangebot bei gleichen Zielprodukt und in den Zonen jeweils gleichen Strömungsgeschwindigkeiten eine Polymerisation mit teilweise unterschiedlichen relevanten organischen Peroxiden und Di-tert.-Butylperoxid in der 1. Zone und im Gegensatz zum Vergleichsbeispiel 5 (5) in allen Fällen mit t-B-PPV und Sauerstoff in der 2. Zone bei wiederum gleichen Prozeßbedingungen in der 3. Zone. Bei allen 3 Beispielen liegen gleiche Starttemperaturen und Halbwertszeiten und dementsprechend das gleiche zahlenmäßige Beschleunigungsfeld a von 1,69 m/s$^2$ in der 2. Zone vor. Darüber hinaus unterscheidet sich Beispiel 7 von (5) bei sonst gleichen Initiierungsbedingungen in der 1. Zone nur in der spezifischen Aldehyddosierung, indem zur Einhaltung der Kettenreglerbegrenzung G/Fz < 2,0 und des Kettenregler-Peroxid-Volumenstrom-Verhältnisses G/(Fz*$c_0$) < 2,0 eine Splittung der Aldehydmenge vorgenommen wird. Die Anwendung von t-B-PPV in der 1. Zone in Beispiel 8 gegenüber t-B-PO in Beispiel 7 und (5) ermöglicht die Ausnutzung noch tieferer polymerisationswirksamer Temperaturen und im Gegensatz zu (5) ohne Anzeichen von thermischer Instabilität in der peroxid- und sauerstoff-initiierten Folgezone mit guten ökonomischen Ergebnissen und vergleichbaren Produkteigenschaften für den speziellen Anwendungsfall im Verpak-

kungs-, Schrumpf- und Schwerlastfolienbereich. Bei Anwendung einer Peroxidlösung mit einem Gehalt von 24 Ma.-% t-B-Pemeodekanoat, entsprechend bei 273 K und Normaldruck 0,88 mol/l, reines Peroxid im Beispiel 9 und einer Reaktoreintrittstemperatur von 397 K in die 1. Zone, entsprechend 7,1 s Halbwertszeit, kann gegenüber (5) ein deutlicher Monomerumsatzzuwachs erzielt werden, der sich durch einen Ausstoßzuwachs in Zone 1 von mindestens 0,2 t/h im Vergleich zu (5) ökonomisch positiv bemerkbar macht. Die Prozeßstabilität und Ausbeute sind gut, solange die beschriebenen Dosier- und Konzentrationsverhältnisse von Aldehyd und relevanten Peroxiden in jeder (Sauerstoff enthaltenden) Reaktionszone auf der Basis eines definierten Beschleunigungsmechanismus in der Radikalbildungsphase im Reaktor in einem (chemisch) quantitativen funktionellen Zusammenhang vorliegen.

Tabelle 1:

| Beispiel | Rohrreaktor-Anlage | Zone | MFI [g/10 min] | FZ | mittl. $\bar{u}$ [m/s] | relevante Peroxidart | 10-h-Halb-wertstemp. [K] | Peroxid-Konz. Konzentration [Ma.-%] | $c_0$ [mol/l] |
|---|---|---|---|---|---|---|---|---|---|
| Vergl. 1a | 1 | 1 | 0,75 | 43,8 | 4,7 | t-B-Perpivalat | 330 | 12,0 | 0,62 |
| Vergl. 1b | 1 | 2 | 0,75 | 43,8 | 9,5 | t-B-Peroktoat | 345 | 7,0 | 0,29 |
| Vergl. 2a | 1 | 1 | 2,0 | 65,1 | 7,4 | t-B-Perpivalat | 330 | 10,0 | 0,52 |
| Vergl. 2b | 1 | 2 | 2,0 | 65,1 | 9,5 | t-B-Perpivalat | 330 | 10,0 | 0,52 |
| Vergl. 3a | 1 | 1 | 0,75 | 43,8 | 4,7 | t-B-Peroktoat | 345 | 7,0 | 0,29 |
| Vergl. 3b | 1 | 2 | 0,75 | 43,8 | 9,5 | t-B-Peroktoat | 345 | 7,0 | 0,29 |
| Vergl. 4a | 1 | 1 | 2,0 | 65,1 | 7,0 | t-B-Peroktoat | 345 | 7,0 | 0,29 |
| Vergl. 4b | 1 | 2 | 2,0 | 65,1 | 9,5 | t-B-Peroktoat | 345 | 7,0 | 0,29 |
| Vergl. 5a | 2 | 1 | 0,25 | 19,9 | 12,1 | t-B-Peroktoat | 345 | 33,8 | 1,41 |
| Vergl. 5b | 2 | 2 | 0,25 | 19,9 | 11,0 | t-B-Peroktoat | 345 | 19,9 | 0,83 |
| Beisp. 6a | 1 | 1 | 0,75 | 43,8 | 4,7 | t-B-Perpivalat | 330 | 16,0 | 0,83 |
| Beisp. 6b | 1 | 2 | 0,75 | 43,8 | 9,5 | t-B-Peroktoat | 345 | 10,0 | 0,42 |
| Beisp. 7a | 2 | 1 | 0,25 | 19,9 | 12,1 | t-B-Peroktoat | 345 | 33,8 | 1,41 |
| Beisp. 7b | 2 | 2 | 0,25 | 19,9 | 11,0 | t-B-Perpivalat | 330 | 12,5 | 0,65 |
| Beisp. 8a | 2 | 1 | 0,25 | 19,9 | 12,1 | t-B-Perpivalat | 330 | 17,5 | 0,90 |
| Beisp. 8b | 2 | 2 | 0,25 | 19,9 | 11,0 | t-B-Perpivalat | 330 | 12,5 | 0,65 |
| Beisp. 9a | 2 | 1 | 0,25 | 19,9 | 12,1 | t-B-Perneodekanoat | 319 | 24,0 | 0,88 |
| Beisp. 9b | 2 | 2 | 0,25 | 19,9 | 11,0 | t-B-Perpivalat | 330 | 12,5 | 0,65 |

EP 1 098 914 B1

Tabelle 1: (Fortsetzung)

| Beispiel | Hochtemp.-Radikalbildner | Start-temp. [K] | $t_{1/2H}$ [s] | $a = \acute{u}/t_{1/2H}$ [m/s²] | PA-Dosis in Zone [kg/h] | PA/FZ [mol/h] | PA/FZ/$c_0$ [l/h] | PE-Ausstoß [l/h] | PE-Ausstoß total [l/h] | Prozeßstabilität |
|---|---|---|---|---|---|---|---|---|---|---|
| Vergl. 1a | Sauerstoff | 413 | 4,2 | 1,12 | 5,7 | 2,25 | 3,62 | 1,8 | | häufige Zersetz. |
| Vergl. 1b | Sauerstoff | 429 | 7,3 | 1,30 | 0 | 0,00 | 0,00 | 3,2 | 5,0 | Instabile Prod. |
| Vergl. 2a | Sauerstoff | 411 | 5,0 | 1,48 | 7,8 | 2,07 | 3,59 | 1,8 | | häufige Zersetz. |
| Vergl. 2b | Sauerstoff | 408 | 6,5 | 1,46 | 0 | 0,00 | 0,00 | 3,3 | 5,1 | Instabile Prod. |
| Vergl. 3a | Sauerstoff | 413 | 28,2 | 0,17 | 5,8 | 2,29 | 7,85 | 1,6 | | stabile Prod. |
| Vergl. 3b | Sauerstoff | 429 | 7,3 | 1,30 | 0 | 0,00 | 0,00 | 3,2 | 4,8 | stabile Prod. |
| Vergl. 4a | Sauerstoff | 413 | 28,2 | 0,25 | 5,5 | 1,46 | 5,02 | 1,6 | | stabile Prod. |
| Vergl. 4b | Sauerstoff | 433 | 5,3 | 1,80 | 2,8 | 0,74 | 2,54 | 3,0 | 4,6 | stabile Prod. |
| Vergl. 5a | Di-t-B-Peroxid | 413 | 28,2 | 0,43 | 2,5 | 2,17 | 1,54 | 5,3 | | stabile Prod. |
| Vergl. 5b | Sauerstoff | 418 | 18,3 | 0,60 | 0,0 | 0,00 | 0,00 | 10,5 | 15,8 | Instabil wg. Zone 1 |
| Beisp. 6a | Sauerstoff | 413 | 4,2 | 1,12 | 4,1 | 1,62 | 1,95 | 1,8 | | stabile Prod. |
| Beisp. 6b | Sauerstoff | 423 | 11,9 | 0,80 | 2,0 | 0,79 | 1,90 | 3,3 | 5,1 | stabile Prod. |
| Beisp. 7a | Di-t-B-Peroxid | 413 | 28,2 | 0,43 | 2,0 | 1,73 | 1,23 | 5,0 | | stabile Prod. |
| Beisp. 7b | Sauerstoff | 408 | 6,5 | 1,69 | 1,0 | 0,87 | 1,34 | 11,0 | 16,0 | stabile Prod. |
| Beisp. 8a | Di-t-B-Peroxid | 407 | 7,1 | 1,70 | 2,0 | 1,73 | 1,92 | 5,1 | | stabile Prod. |
| Beisp. 8b | Sauerstoff | 408 | 6,5 | 1,69 | 1,0 | 0,87 | 1,34 | 11,0 | 16,1 | stabile Prod. |
| Beisp. 9a | Di-t-B-Peroxid | 397 | 7,1 | 1,70 | 2,0 | 1,73 | 1,96 | 5,5 | | stabile Prod. |
| Beisp. 9b | Sauerstoff | 408 | 6,5 | 1,69 | 1,0 | 0,87 | 1,34 | 11,0 | 16,5 | stabile Prod. |

EP 1 098 914 B1

**Patentansprüche**

1. Verfahren zur Herstellung von Ethylenhomo- und Ethylencopolymerisaten im Dichtebereich bis 0,930 g/cm$^3$ und im Schmelzindexbereich zwischen 0,15 und 25 g/10 min. (2,16 kg; 463 K) bei Drücken oberhalb 1000 bar und bei Temperaturen bis 603 K in mehrzonigen Rohrreaktoren in Gegenwart von Sauerstoff, einem organischen Peroxid mit einer 10 h-Halbwertszeit von weniger als 360 K, und Kettenreglern, von denen mindestens einer eine aldehydische Struktur aufweist und gegebenenfalls anderen Modifikatoren und Comonomeren, **dadurch gekennzeichnet, daß** in einem, jeder Reaktionszone zuordenbaren temperatur- und druckabhängigen Beschleunigungsfeld die Verfahrensbedingungen so eingestellt werden, daß der Quotient a aus a = ù/t$_{1/2H}$[Peroxid], worin ù die mittlere Strömungsgeschwindigkeit des Monomeren oder Reaktionsgemisches am jeweiligen Dosierort des organischen Peroxides in m*s$^{-1}$ und t$_{1/2H}$ [Peroxid] die mittlere temperatur- u. druckabhängige Halbwertszeit des organischen Peroxides am jeweiligen aktuellen Dosierort im Reaktor in Sekunden ist, in einem Gültigkeitsbereich von a = 1,0 ± 0,7 m*s$^{-2}$, vorzugsweise 1,0 ± 0,5 m*s$^{-2}$, das Verhältnis G/F$_z$ < 2 erfüllt, und die Konzentration jedes zum Einsatz kommenden organischen Peroxides c$_o$, gemessen in mol/l reines Peroxid, nur so niedrig eingestellt wird, daß der als Verhältnis G/(F$_z$ * c$_o$) definierte Volumenstrom, gemessen in l*h$^{-1}$, stets < 2 ist, worin G die maximale in jede Reaktionszone dosierte reine Aldehydmenge in mol/h und F$_z$ die auf den mittleren Schmelzindex bezogene Fließzahl des Zielproduktes gemäß dem Zusammenhang F$_z$ = 50*[log$_{10}$ (MFI) + 1] sind und MFI der gemessene mittlere Schmelzindex in g/10 min des gewünschten Zielproduktes unter den für LDPE üblichen Meßbedingungen 463 K und 2,16 kg Belastung ist.

2. Verfahren gemäß Anspruch 1, **dadurch gekennzeichnet daß** bei Anwendung von organischen Peroxidgemischen jede einzelne Komponente den genannten Initiierungsbedingungen unterliegt, sofern unabhängig von der jeweiligen Stoffklasse deren Radikalbildungsgeschwindigkeit am Reaktor-Dosierort mit einer 10 h Halbwertszeit von weniger als 360 K deutlich meßbar über der Zerfallsgeschwindigkeit des anwesenden Sauerstoffs liegt und somit keine temperatur- oder geschwindigkeitsidentische Radikalbildungsreaktionen aus Peroxid und Sauerstoff stattfinden.

3. Verfahren gemäß Anspruch 1 und 2, **dadurch gekennzeichnet daß** die beiden Stabilitätskriterien G/F$_z$ < 2 und G/(F$_z$ * c$_o$) < 2 auch in den Reaktionszonen gelten, in denen zwar stets organisches Peroxid (Initiator 1) aber nicht organisches Peroxid und Sauerstoff (Initiator 2) gleichzeitig anwesend sein müssen, jedoch Initiator 1 und Initiator 2 gleichzeitig in einer oder mehreren anderen Zonen, vorzugsweise in der Folgezone.

**Claims**

1. Process for the preparation of ethylene homopolymers and ethylene copolymers having a density in the range up to 0.930 g/cm$^3$ and a melt flow index in the range between 0.15 and 25 g/10 min. (2.16 kg; 463 K) at pressures above 1000 bar and at temperatures up to 603 K in multizone tubular reactors in the presence of oxygen, an organic peroxide having a 10 h half life of less than 360 K, and chain regulators, at least one of which has an aldehydic structure, and optionally other modifiers and comonomers, **characterized in that**, in a temperature- and pressure-dependent acceleration field which can be assigned to each reaction zone, the process conditions are set in such a way that the quotient a from a = ù/t$_{1/2H}$ [peroxide], in which ù is the mean flow velocity of the monomer or reaction mixture at the particular metering site of the organic peroxide in m*s$^{-1}$, and t$_{1/2H}$ [peroxide] is the mean temperature- and pressure-dependent half life of the organic peroxide at the particular current metering site in the reactor in seconds, in a validity range of a = 1.0 ± 0.7 m*s$^{-2}$, preferably 1.0 ± 0.5 m*s$^{-2}$, satisfies the ratio G/F$_z$ < 2, and the concentration c$_o$ of each organic peroxide used, measured in mol/l of pure peroxide, is only set sufficiently low that the volume flow rate defined as the ratio G/(F$_z$*c$_o$), measured in l*h$^{-1}$, is always < 2, in which G is the maximum pure amount of aldehyde metered into each reaction zone in mol/h and F$_z$ is the flow coefficient of the target product, based on the mean melt flow index, in accordance with the correlation F$_z$ = 50*[log$_{10}$ (MFI) + 1], and MFI is the measured mean melt flow index in g/10 min of the desired target product under the usual measurement conditions for LDPE of 463 K and a load of 2.16 kg.

2. Process according to Claim 1, **characterized in that**, on use of organic peroxide mixtures, each individual component is subject to the said initiation conditions if, independently of the respective substance class, the free-radical formation rate thereof at the reactor metering site with a 10 h half life of less than 360 K is clearly measurably above the decomposition rate of the oxygen present, and thus no temperature- or rate-identical free-radical formation reactions of peroxide and oxygen take place.

3. Process according to Claim 1 and 2, **characterized in that** the two stability criteria $G/F_z < 2$ and $G/(F_z*c_o) < 2$ also apply in the reaction zones in which, although organic peroxide (initiator 1) must always be present, but organic peroxide and oxygen (initiator 2) simultaneously need not, initiator 1 and initiator 2 must, however, simultaneously be present in one or more other zones, preferably in the subsequent zone.

**Revendications**

1. Procédé de préparation d'homopolymérisats ou de copolymérisats d'éthylène, présentant une densité allant jusqu'à 0,930 g/cm$^3$ et un indice de fluidité à chaud compris entre 0,15 et 25 g/10 min (2,16 kg ; 463 K), mis en oeuvre sous des pressions dépassant 1 000 bars et à des températures allant jusqu'à 603 K, dans des réacteurs tubulaires à plu-sieurs zones, en présence d'oxygène, d'un peroxyde organique ayant une demi-vie de 10 h vaut moins de 360 K, et de régulateurs de chaînes dont un au moins présente une structure d'aldéhyde, et le cas échéant, d'autres modifica-teurs ou comonomères, **caractérisé en ce que**, dans un champ d'accélération dépendant de la température et de la pression et pouvant être associé à chaque zone de réaction, les conditions opératoires sont réglées de telle manière que le quotient a, défini par la relation a = ù/t$_{1/2H}$[peroxyde] dans laquelle ù représente la vitesse moyenne, en m/s, d'écoulement du monomère ou du mélange réactionnel en chaque point de dosage du peroxyde organique et t$_{1/2H}$[peroxyde] représente le temps, en secondes, de demi-vie du peroxyde organique, dépendant de la température et de la pression, en chaque point de dosage effectif dans le réacteur, dans un domaine de validité défini par a = 1,0 ± 0,7 m/s$^2$, et de préférence 1,0 ± 0,5 m/s$^2$, fait que le rapport $G/F_z$ vaut moins de 2, et **en ce que** la concentration c$_o$ de chaque peroxyde organique utilisé, mesurée en mol/l de peroxyde pur, est réglée à une valeur si basse que le débit volumique, mesuré en l/h et défini comme étant le rapport $G/(F_z*c_o)$ est toujours inférieur à 2, G étant le débit maximal, en mol/h, d'aldéhyde pur mesuré dans chaque zone de réaction, et $F_z$ étant l'indice d'écoulement du produit recherché, relié à l'indice moyen de fluidité à chaud par la relation Fz = 50*[log$_{10}$ (MFT) + 1] où MFI représente l'indice moyen de fluidité à chaud du produit recherché, en g/10 min, mesuré dans les conditions habituelles pour des PEbd, à savoir à la température de 463 K et sous une charge de 2,16 kg.

2. Procédé selon la revendication 1, **caractérisé en ce que**, quand on utilise un mélange de peroxydes organiques, chaque composant individuel est soumis aux conditions d'amorçage indiquées, dans la mesure où, indépendamment de la classe de la substance concernée, sa vitesse de formation de radicaux, au point de dosage du réacteur ayant une demi-vie de 10 h vaut moins de 360 K, dépasse de manière nettement mesurable la vitesse de dissociation de l'oxygène présent, et qu'en conséquence il ne se produit pas de réactions identiques, en température et en vitesse, de formation de radicaux à partir de peroxyde et d'oxygène.

3. Procédé selon la revendication 1 ou 2, **caractérisé en ce que** les deux critères de stabilité $G/F_z < 2$ et $G/(F_z*c_o) < 2$ valent également dans les zones de réaction dans lesquelles il doit toujours y avoir un peroxyde organique (amorceur 1), mais non pas un peroxyde organique et de l'oxygène (amorceur 2) en même temps, l'amorceur 1 et l'amor-ceur 2 étant toutefois présents en même temps dans une ou plusieurs autres zones, de pré-férence dans la zone qui suit.